# EUROPEAN PATENT SPECIFICATION

(11) **EP 2 949 210 B1**
(45) Date of publication and mention of the grant of the patent: **30.01.2019**
(21) Application number: 14169978.5
(22) Date of filing: 27.05.2014
(51) Int. Cl.: A01K 79/02, A01K 97/02

(54) **Device for locating and catching fish**
Vorrichtung zum Auffinden und Fangen von Fisch
Dispositif permettant de localiser et attraper des poissons

(43) Date of publication of application: 02.12.2015
(73) Proprietor: Rotogal, S.L., 15930 Boiro - A Coruña (ES)
(72) Inventor: Mendez Gago, Hector, 15930 Boiro - A Coruña (ES); Sieira Pouso, Ramón, 15930 Boiro - A Coruña (ES)
(74) Representative: Carvajal y Urquijo, Isabel

(56) References cited:
- DE-C- 169 693
- US-A- 4 471 552
- US-A- 5 161 324
- US-A- 5 235 774
- US-B1- 6 203 170

## Description

### Field of the invention

The present invention falls within the field of fishing and more specifically, refers to a device for locating and catching fish, especially fish from the tuna family.

### Background of the invention

Currently, in order to locate and capture fish, especially fish from the tuna family, a series of cages are employed, which are almost artisan and made from a plurality of bamboo canes. Net tackle is usually connected to said cages, in which bait such as small fish are placed or muscles are allowed to proliferate in these nets, both fish and muscles usually being used as bait to attract the tuna.

The cages described above present various major problems. Firstly, given that tuna are large fish, when they are trapped by the net tackle in search of bait, they move violently, which sometimes partially or fully destroys the cages where large units are concerned, thus meaning they are rendered inutile for subsequent use. On other occasions, owing to the swinging movement of the fish trapped in the net tackle, they gradually tear said tackle given the continuous friction acting thereon in certain angular areas of the cages mentioned and as a result, the fish free themselves after a certain period of time.

Furthermore, since bamboo canes are used, constituting organic material, with the humidity of the salt water and constant temperature change between day and night, as well as another series of factors such as large storms, for example, the cages deteriorate relatively quickly, this affecting not only the cane itself but also the ropes that join the same in order to form the cage, maintenance and replacement costs thus being quite high.

Document DE169693C discloses a transparent and apertured container for holding live bait fish. The container has a separate section from the hook cylinder of such dimensions that fishes can move around freely.

Given all of the above, interest in designing a device for locating and catching fish has been detected, which, with a simple construction, may resolve the problems set out above and at the same time, be easily stored outside the water.

This aim is achieved by means of the invention as defined in claim 1. In the dependent claims, preferred embodiments of the invention are defined.

### Description of the invention

The invention refers to a device for locating and catching fish, comprising a floating body from which tackle containing bait is hung. The device object of the present invention is unique in that the floating body is substantially polygonal in shape, with reduced thickness in comparison to its main dimensions, being made from a core of highly floatable material and covered with a highly resistant external layer. Furthermore, said floating body has a plurality of first openings close to the edge of the same and a group of second openings located in the central area thereof.

Thanks to the configuration of the floating body, which has an ample floating surface and is reduced in thickness and also thanks to the material from which it is made, firstly with high floatability factor in its core and given the highly resistant surface of the outer layer, a device capable of supporting large loads, in terms of the weight of the fish to be captured, is obtained and where the device is highly impact resistant thanks to the highly resistant external layer. In addition, the strategic arrangement of the first and second openings means that the resistance to traction of the entire device is increased, given that said openings serve to make the floating body rigid. The first openings are intended to serve as connection means to connect the device to a vessel, for example or as connection points between a plurality of devices if various devices are required in the same area of the sea, with the aim of installing a "field" of devices, in order to improve the probability of catching fish. The second openings will serve to operate as hooking points for the net tackle that will contain the bait that attracts the prey to be captured, said second openings being arranged in the centre of the floating body, given that, in this way, the force needed to sink the same is greater if throwing from this area than if throwing from another peripheral area of the floating body.

In a preferred embodiment of the invention, the floating body may be a parallelepiped and more specifically may be rectangular in a plan view with rounded vertices, this shape being advantageous for the aim of the present invention but not being limiting in any way, it being possible for the floating body to adopt other equivalent polygonal shapes.

In a preferred embodiment of the invention, the core of the floating body may advantageously be made from polyurethane closed cell foam, since this material possesses high floatability and high structural resistance characteristics and is, above all, very light, which is very important when it comes to handling the device, be it for the transportation or storage thereof. Other materials with equivalent physical characteristics may also be employed.

In a preferred embodiment of the invention, the first openings are located around the vertices of the floating body, this position being advantageous when it comes to analysing load distribution when the device is hooked to a vessel or to other similar devices. The device may therefore be hooked to four objects, which may be a vessel or various similar devices. It must be noted that the number and arrangement of the first openings may vary, provided that the device's load conditions are maintained. The first openings may be a conical trunk shape and in the portion with the smallest diameter thereof, have a circular tab that surrounds the outside of the opening, protruding from a first face of the floating body, the portion with the largest diameter thereof that intersects with the corresponding second face of the floating body furthermore being rounded. The main aim of the conical trunk shape of the first openings, especially the tab mentioned, is to serve as collaborative elements when it comes to stacking the devices one on top of the other, meaning that the tabs that protrude from the lower face of the device fit into the portion with the largest diameter of the device directly below, fitting into the same and thus meaning that there are no relative movements between two contiguous devices stacked up. Moreover, these first openings will serve as handles for gripping the device and will therefore be of great help when it comes to handling the same during the loading and storage thereof.

The roundness of the corners or intersections in the portion of the openings with the largest diameter means that when there is a relative movement of the floating body relative to the end tied to the corresponding first opening, the end is not torn at any point, owing to said roundness and therefore, the ends last much longer.

In a preferred embodiment of the invention, the group of second openings may comprise four openings, each second opening being rounded at the intersection with each one of the first and second opposite faces of the floating body in which they are made. As is the case with the first openings, this roundness seeks to prevent premature tearing of the ends that join the floating body to the tackle containing bait. As mentioned above, the number of openings is not limited, nor is the diameter or separation thereof. Rather, the distribution described herein has been found to be advantageous but other equivalent configurations may exist.

### Brief description of the drawings

Below is a brief description of a series of drawings, which facilitate a better understanding of the invention and relate expressly to one embodiment of said invention, presented as a non-limiting example thereof.
Figure 1 is a perspective from above of a device for locating and catching fish, comprised within the existing state of the art.
Figure 2 is a perspective view of the device for locating and catching fish, object of the present invention.
Figure 3 is an upper plan view of the device for locating and catching fish, object of the present invention.
Figure 4 is a cross section of the device for locating and catching fish, object of the present invention, according to the cut plane shown in Figure 3.
Figure 5 is a perspective view of the device for locating and catching fish, object of the present invention, as it would be installed in the sea.
Figure 6 is a partially sectioned perspective view of a pile of various devices for locating and catching fish, object of the present invention.

In the figures mentioned above, a series of references corresponding to the elements indicated below are identified, this list not being limiting in any way:
1. floating body
2. tackle containing bait
3. core of the floating body
4. external layer of the floating body
5. first openings of the floating body
6. edges of the floating body
7. second openings of the floating body
8. central area of the floating body
9. vertices of the floating body
10. portion of the first openings with the smallest diameter
11. circular tab of the portion of the first openings with the smallest diameter
12. first face of the floating body
13. area where the largest portion of the first openings intersect
14. portion of the first openings with the largest diameter
15. second face of the floating body
16. intersections between each second opening and the first and second opposite faces of the floating body
17. bamboo canes of the device pertaining to the state of the art
18. floats of the device pertaining to the state of the art
19. tackle of the device pertaining to the state of the art
20. fish
21. bait
22. ends joining the tackle to the floating body

### Detailed description of the invention

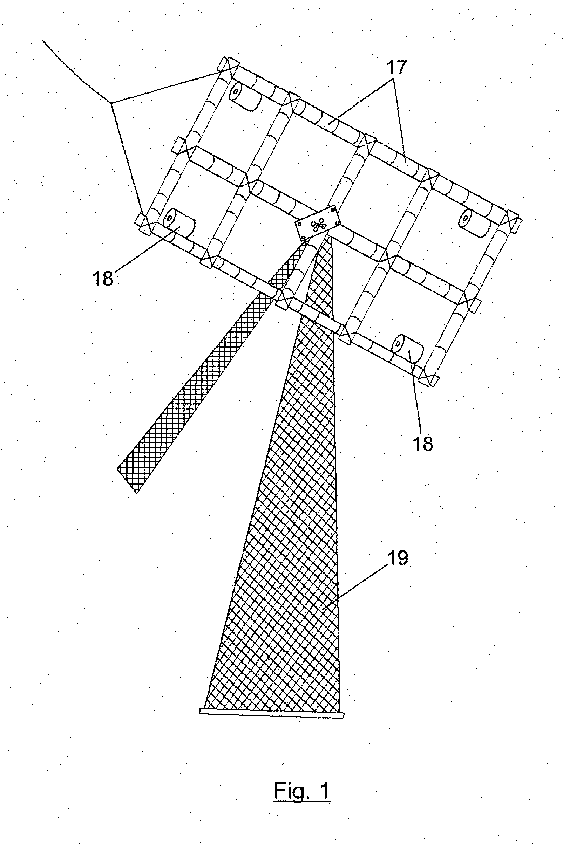

In Figure 1, it is possible to observe a device for locating and catching fish currently used. Said device consists of a plurality of bamboo canes 17 crossed over one another, joined by means of ropes, forming a type of grille, in which a number of small floats 18 are fitted. Tackle 19 in the form of a net is hung from the central portion of the device, inside of which the bait intended to attract the attention of the fish in order to subsequently catch them is placed. As mentioned above, the main limitations of this device is that it is not very durable or resistant, given that said bamboo canes 17 deteriorate quickly with the humidity, salt and solar radiation, as do the ropes that join them.

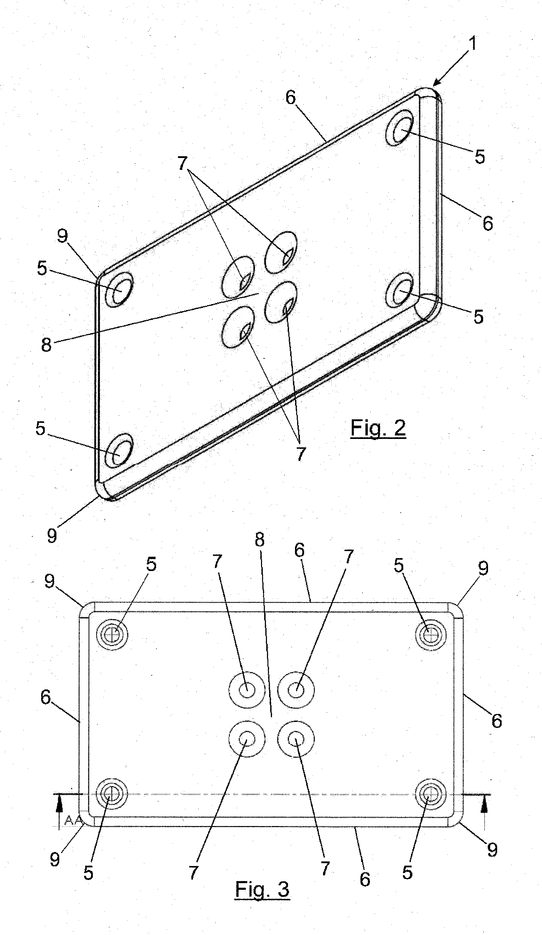

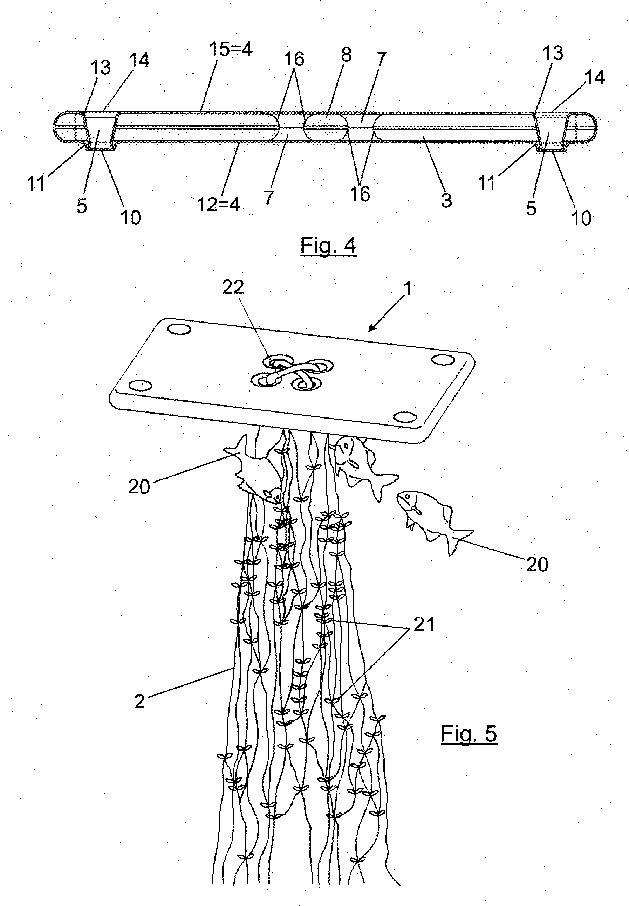

In Figures 2, 3 and 4, it is possible to clearly observe the configuration of the device, object of the invention and more specifically, in Figure 2, which provides a perspective view of the device for locating and catching fish, said device comprising a floating body 1, from which tackle containing bait 2 is hung. The floating body 1, in this particular embodiment of the invention, is polygonal and parallelepiped in shape, specifically rectangular and the vertices 9 thereof are rounded and the thickness thereof reduced in comparison to the main dimensions of the same. The floating body 1 has a plurality of first openings 5, which are located near the edges 6 of said body and more specifically, around the vertices 9 of the same. Said first openings 5 are conical trunk shaped and in the portion with the smallest diameter 10 thereof, have a circular tab 11 that surrounds the outside of the opening and protrudes from a first face 12 of the floating body 1, through the portion where the portion with the largest diameter 14 that intersects 13 with the second face 15 of the floating body 1 is rounded. The configuration of the first openings 5 may be observed clearly in Figure 4.

Furthermore, the floating body 1 has a group of second openings 7, which are located in the central area 8 of said body. More specifically, four second openings 7 are made in the present embodiment of the invention, the intersections 16 between each second opening 7 and each one of the first and second faces 12 and 15 of the floating body 1 being rounded. This may be observed clearly in Figure 4.

The floating body 1 is made in a core 3 of highly-floatable material, for example closed cell polyurethane, which is covered in a highly-resistant external surface layer 4, which may be formed from any highly durable polymer, capable of enduring harsh weather and the impact the devices may suffer during both the loading and installation thereof in the sea and when they are floating in the water.

Figure 5 is a perspective view of the device for locating and catching fish, once it has been installed in the sea, it being possible to observe the floating body 1 and the tackle 2 containing bait 21 in said figure, in this case the bait being muscles. It also represents various fish 20 in order to facilitate better comparison of the invention. The tackle 2 is joined to the floating body 1 by means of ends 22. The present invention has been thought up in order to capture mainly tuna but is also applicable to any other kind of fish.

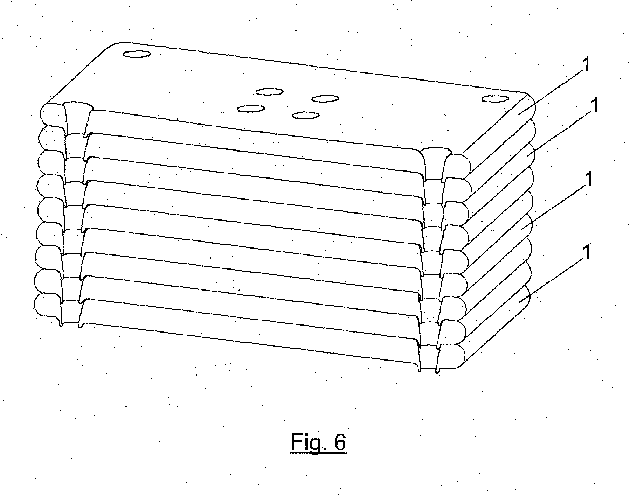

Finally, Figure 6 is a perspective, partially sectioned view of a plurality of devices stacked up, in which it is possible to observe how the first openings 5, thanks to their tab 11 and conical trunk shape, serve as interlocking elements between the contiguous devices placed one on top of the other, thus facilitating the handling and storage thereof.

All the corners of the floating body have been rounded in order to prevent the same from damaging other contiguous devices during the stacking and transportation of various devices and also to prevent people who handle the devices from getting injured.

The colour and texture of the device have been selected specifically in order to prevent visual impact as far as possible. The size of the device has been adjusted to optimize the logistical transportation thereof, given that it is a product ship-owners must send to different countries in which the fleet can be found.

## Claims

1. Device for locating and catching fish, comprising a floating body (1) from which tackle (2) containing bait (21) is hung, the floating body (1) being substantially polygonal in shape, with reduced thickness in comparison to the main dimensions thereof, said device **characterised in that** is made in a core (3) of highly floatable material covered in an highly resistant external surface layer (4), where said floating body (1) has a plurality of first openings (5) near the edges (6) of the same and a group of second openings (7) located in the central area (8) of the same.

2. Device for locating and catching fish according to claim 1, **characterised in that** the floating body (1) is a parallelepiped.

3. Device for locating and catching fish according to the previous claims, **characterised in that** the floating body (1) is rectangular in shape with rounded vertices (9).

4. Device for locating and catching fish according to the previous claims, **characterised in that** the core (3) of the floating body (1) is made from closed cell polyurethane foam.

5. Device for locating and catching fish according to the previous claims, **characterised in that** the first openings (5) are arranged around the vertices (9) of the floating body (1).

6. Device for locating and catching fish according to the previous claims, **characterised in that** the first openings (5) are conical trunk shaped and in the portion with the smallest diameter (10) thereof, have a circular tab (11) that surrounds the outside of the opening and protrudes from a first face (12) of the floating body (1) and **in that** the intersection (13) between the portion with the largest diameter (14) thereof and the corresponding second face (15) of the floating body (1) is rounded.

7. Device for locating and catching fish according to the previous claims, **characterised in that** the group of second openings (7) comprises four openings, the intersections (16) between each second opening (7) and each one of the first and second opposite faces (12, 15) of the floating body (1) in which they are made being rounded.

## Patentansprüche

1. Vorrichtung zum Auffinden und Fangen von Fisch, die einen schwimmenden Körper (1) umfasst, an dem ein Köder (21) enthaltendes Seil (2) aufgehängt ist, wobei der schwimmende Körper (1) eine im Wesentlichen polygonale Form besitzt, wobei die Dicke im Vergleich zu den Hauptabmessungen davon reduziert ist, wobei die Vorrichtung **dadurch gekennzeichnet ist, dass** sie in einem Kern (3) aus einem hochschwimmfähigen Werkstoff ausgebildet ist, der mit einer hochwiderstandsfähigen äußeren Oberflächenschicht (4) beschichtet ist, wobei der schwimmende Körper (1) mehrere erste Öffnungen (5) nahe den Rändern (6) desselben und eine Gruppe von zweiten, im zentralen Bereich (8) desselben liegende Öffnungen (7) aufweist.

2. Vorrichtung zum Auffinden und Fangen von Fisch gemäß Anspruch 1, **dadurch gekennzeichnet, dass** der schwimmende Körper (1) ein Parallelepiped ist.

3. Vorrichtung zum Auffinden und Fangen von Fisch gemäß den vorhergehenden Ansprüchen, **dadurch gekennzeichnet, dass** der schwimmende Körper (1) eine rechteckige Form mit abgerundeten Spitzen (9) besitzt.

4. Vorrichtung zum Auffinden und Fangen von Fischen gemäß den vorhergehenden Ansprüchen, **dadurch gekennzeichnet, dass** der Kern (3) des schwimmenden Körpers (1) aus geschlossenzelligem Polyurethanschaum besteht.

5. Vorrichtung zum Auffinden und Fangen von Fisch gemäß den vorhergehenden Ansprüchen, **dadurch gekennzeichnet, dass** die ersten Öffnungen (5) um die Spitzen (9) des schwimmenden Körpers (1) angeordnet sind.

6. Vorrichtung zum Auffinden und Fangen von Fisch gemäß den vorhergehenden Ansprüchen, **dadurch gekennzeichnet, dass** die ersten Öffnungen (5) kegelstumpfförmig sind und in dem Abschnitt mit dem kleinsten Durchmesser (10) davon eine kreisförmige Lasche (11) aufweisen, die die Außenseite der Öffnung umgibt und von einer ersten Fläche (12) des schwimmenden Körpers (1) vorsteht, und dass der Schnittpunkt (13) zwischen dem Abschnitt mit dem größten Durchmesser (14) davon und der entsprechenden zweiten Fläche (15) des schwimmenden Körpers (1) abgerundet ist.

7. Vorrichtung zum Auffinden und Fangen von Fisch gemäß den vorhergehenden Ansprüchen, **dadurch gekennzeichnet, dass** die Gruppe zweiter Öffnungen (7) vier Öffnungen umfasst, wobei die Schnittpunkte (16) zwischen jeder zweiten Öffnung (7) und jeder der ersten und zweiten gegenüberliegenden Flächen (12, 15) des schwimmenden Körpers (1), in dem sie ausgebildet sind, abgerundet sind.

## Revendications

1. Dispositif pour localiser et attraper le poisson, comprenant un corps flottant (1) auquel un palan (2) contenant un appât (21) est accroché, le corps flottant (1) ayant une forme sensiblement polygonale, avec une épaisseur réduite par rapport à ses dimensions principales, ledit dispositif **caractérisé en ce qu'**il est constitué dans un noyau (3) de matériau hautement flottable recouvert d'une couche de surface externe hautement résistante (4), où ledit corps flottant (1) a une pluralité de premières ouvertures (5) proches des bords (6) de ce dernier et un groupe de deuxièmes ouvertures (7) situées dans la zone centrale (8) de ce dernier.

2. Dispositif pour localiser et attraper le poisson selon la revendication 1, **caractérisé en ce que** le corps flottant (1) est parallélépipède.

3. Dispositif pour localiser et attraper le poisson selon les revendications précédentes, **caractérisé en ce que** le corps flottant (1) a une forme rectangulaire avec des sommets arrondis (9).

4. Dispositif pour localiser et attraper le poisson selon les revendications précédentes, **caractérisé en ce que** le noyau (3) du corps flottant (1) est constitué de mousse de polyuréthane à cellules fermées.

5. Dispositif pour localiser et attraper le poisson selon les revendications précédentes, **caractérisé en ce que** les premières ouvertures (5) sont disposées autour des sommets (9) du corps flottant (1).

6. Dispositif pour localiser et attraper le poisson selon les revendications précédentes, **caractérisé en ce que** les premières ouvertures (5) ont une forme tronconique et dans la portion avec le plus petit diamètre (10) de celles-ci, ont une languette circulaire (11) qui entoure l'extérieur de l'ouverture et fait saillie d'une première face (12) du corps flottant (1) et **en ce que** l'intersection (13) entre la portion avec le plus grand diamètre (14) de celles-ci et la deuxième face correspondante (15) du corps flottant (1) est arrondie.

7. Dispositif pour localiser et attraper le poisson selon les revendications précédentes, **caractérisé en ce que** le groupe de deuxièmes ouvertures (7) comprend quatre ouvertures, les intersections (16) entre chaque deuxième ouverture (7) et chacune des première et deuxième faces opposées (12, 15) du corps flottant (1) dans lequel elles sont constituées étant arrondies.
